# EUROPÄISCHE PATENTANMELDUNG

(11) **EP 1 464 571 A2**
(43) Veröffentlichungstag der Anmeldung: **06.10.2004**
(21) Anmeldenummer: 04008148.1
(22) Anmeldetag: 02.04.2004
(51) Int. Cl.: B62K 23/04, B62K 11/14

(54) **Elektronisches Gassystem für Motorräder**

(30) Priorität: 04.04.2003 DE 10315448
(71) Anmelder: AB Elektronik GmbH, 59368 Werne (DE)
(72) Erfinder: Fallak, Klaus, 59368 Werne (DE); Leone, Carmelo, 85375 Neufahrn (DE)
(74) Vertreter: Patentanwälte Wenzel & Kalkoff

(57) **Zusammenfassung**

Die Erfindung betrifft eine elektronische Gassystemvorrichtung 10 für Motorräder, die an einem Lenkerelement 12 angeordnet ist. Ein Drehgasstellelement 16 ist zwischen Leerlaufstellung und Vollgasstellung drehbar zu verstellen. Ein Drehstellungsgeber 104 mit einer Rotor- und Statoreinheit ist entweder in der Drehachse des Drehgasstellelements 16 oder außerhalb von dieser angeordnet. Im ersten Fall ist zur Ankopplung eine Zwischenkopplungseinheit 50 vorgesehen, die sowohl mit dem Drehgasstellelement 16 als auch mit der Rotoreinheit 46, 74 drehfest verbunden ist, aber evtl. auftretende Querbelastungen nicht überträgt. Im zweiten Fall ist zur Ankopplung ein Eingriffselement 92 mit ersten Zähnen 94 vorgesehen, das mit einem Zahnelement 96 mit zweiten Zähnen 98 im Eingriff steht, wobei ein Rückholelement 100, 114 entgegen der Betätigungsrichtung so auf die Rotoreinheit 106 wirkt, daß der Eingriff zwischen ersten und zweiten Zähnen im wesentlichen spielfrei ist.

Als Drehstellungsgeber kommt bevorzugt ein Halleffekt-Drehsensor oder induktiver Drehsensor zum Einsatz, wobei im ersten Fall eine Rotoreinheit 46, 106 gegenüber einer Statoreinheit 44, 108 mit zwei Statorteilelementen 58a, 58b zu bewegen ist, von denen ein erstes Statorringelement 58a 100° bis 140° lang und ein zweites Statorringelement 58b 220° bis 260° lang ist. Im zweiten Fall ist auf der Rotoreinheit 74 ein induktives Koppelelement 78 angeordnet, und an der Statoreinheit 76 ein Spulenschaltkreis 80, wobei der Spulenschaltkreis 80 teilringförmig ausgebildet ist und sich über einen Winkelbereich von 100° bis 140° erstreckt.

## Beschreibung

Die Erfindung betrifft eine elektronische Gassystemvorrichtung für Motorräder, die an einem Lenkerelement angeordnet ist.

Bei Motorrädern wird als Gasstellelement üblicherweise ein Drehgriff am Lenker verwendet. Während bei herkömmlichen Motorrädern die Stellung des Drehgriffs über einen Bowdenzug direkt die Stellung einer Drosselklappe am Motor vorgab, werden nun für Motorräder, wie für Automobile bereits bekannt, elektronische Gassysteme in Erwägung gezogen.

Aus der DE-A-195 47 408 ist eine elektronische Gassystemvorrichtung für Motorräder bekannt, die an einem Lenkerelement angeordnet ist. Als Drehgasstellelement ist ein am Lenker verstellbarer Drehgriff vorgesehen. In dem Drehgriff ist als elektrischer Drehstellungsgeber ein Hall-Drehwinkelsensor, Drehpotentiometer, optischer Drehwinkelsensor, kapazitiver Sensor, oder induktiver Sensor vorgesehen. Das Sensorsignal wird in einer Steuereinheit ausgewertet. Durch die Steuereinheit wird ein geeigneter, der Stellung des Drehgriffs entsprechender Öffnungswinkel der Drosselklappe des Motors vorgegeben. Es hat sich allerdings herausgestellt, daß die Anordnung eines Drehstellungsgebers innerhalb des Drehgriffs nachteilig für die Handhabung und Montage ist. Vor allem aber wird der Drehgriff aufgrund des darin enthaltenen Sensors zu voluminös.

In der DE-U-8717587 ist ein Fahrrad mit Motor beschrieben. Die Steuerung des Motors erfolgt über einen Drehgriff, dessen Position mit einem Potentiometer abgefragt wird. Das Potentiometer kann innerhalb des Griffs angeordnet sein, oder neben diesem. Bei letzterer Anordnung erfolgt eine Übertragung der Drehbewegung des Griffes auf das Potentiometer mittels Kegelzahnrädern.

In der US-B-6276230 ist ein elektronisches Gassystem beschrieben. Ein Drehgriff eines Fahrzeugs ist an einem Lenkerrohr drehbar befestigt. Zum Erkennen der Stellung des Drehgriffs ist ein Drehsensor vorgesehen. Zwischen dem Drehgriff und dem Sensor ist eine nicht näher dargestellte mechanische Kopplungseinheit vorgesehen. Aus dieser ragen Vorsprünge heraus, die in den Drehgriff eingreifen und diesen drehfest ankoppeln. Die mechanische Kopplungseinheit weist eine Einrichtung zur Begrenzung des Drehwinkels, ein Federelement zur Rückstellung des Drehgriffs und den Drehsensor auf.

Bei der gezeigten Konstruktion, bei der der Sensor offenbar in der Drehachse des Drehgriffs angeordnet ist, ergibt sich das Problem, daß die bei Handhabung des Drehgriffs möglicherweise auftretenden Querbelastungen an den Sensor weitergegeben werden und hier einerseits zu mechanischen Beanspruchungen und andererseits zu ungenauer Meßwerterfassung führen können.

In der EP-A-1 338 502 ist eine Gassystemvorrichtung für Zweiräder offenbart. Die Position eines Drehgriffs wird durch einen Drehsensor ermittelt. Zur Übertragung der Drehbewegung des Griffs auf den Sensor sind Zahnräder vorgesehen. Eine Spiralfeder wirkt als Rückstellelement hierbei auf das drehgriffseitige Zahnrad. Zur Einstellung einer Gegenkraft ist an dem Zahnrad ferner ein federbelasteter Reibring vorgesehen.

Bei der gezeigten Konstruktion muß für eine genaue Steuerung der Eingriff der Zahnräder hochgenau ausgeführt sein, so daß die Vorrichtung entsprechend aufwendig ist.

Ein weiteres Beispiel eines Gasdrehgriffs zeigt die JP-A-04254278. Hierbei ist ein Drehgriff drehbar an einer Lenkerstange gelagert. Ein Bowdenzug ist über ein Seilführungselement mit der Griffeinheit gekoppelt. Ein Sensorzahnrad eines Drehsensors ist über eine Verzahnung ebenfalls an den Drehgriff gekoppelt.

Bezüglich einer Gassystemvorrichtung, bei der ein Drehstellungsgeber außerhalb der Drehachse eines Drehgasstellelements angeordnet ist, ist es Aufgabe der Erfindung, eine Konstruktion vorzuschlagen, die bei geringem Aufwand eine genaue Steuerung erlaubt.

Diese Aufgabe wird gelöst durch eine Vorrichtung gemäß Anspruch 1. Vorteilhafte Weiterbildungen hierzu sind in abhängigen Ansprüchen angegeben.

Bezüglich einer Gassystemvorrichtung bei der der Drehstellungsgeber im wesentlichen in der Drehachse des Drehgasstellelements angeordnet ist, ist es Aufgabe der Erfindung, die Einflüsse von möglichen Querbelastungen zu verringern.

Diese Aufgabe wird gelöst durch eine Vorrichtung gemäß Anspruch 7. Vorteilhafte Weiterbildung hierzu sind in abhängigen Ansprüchen angegeben.

Schließlich ist es eine weitere Aufgabe der Erfindung, eine Gassystemvorrichtung anzugeben, mit der ein hochgenaues Sensorsignal erzielt wird.

Diese weitere Aufgabe wird gelöst durch elektronische Gassystemvorrichtungen nach den Ansprüchen 16 und 18. Abhängige Ansprüche beziehen sich auf vorteilhafte Ausführungsformen der Erfindung.

Bei der Lösung der Aufgabe gemäß Anspruch 1 ist bei einer elektronischen Gassystemvorrichtung mit Drehgasstellelement (z. B. einem Drehgriff) und Drehstellungsgeber (bevorzugt induktiver oder Halleffekt-Drehsensor), bei der der Drehstellungsgeber außerhalb der Drehachse des Drehgasstellelements angeordnet und dessen Rotoreinheit mit dem Drehgasstellelement über erste Zähne eines Eingriffselements und zweite Zähne eines Zahnelements gekoppelt ist, ein Rückholelement mit der Rotoreinheit so gekoppelt, daß der Eingriff zwischen den ersten und zweiten Zähnen im wesentlichen spielfrei ist.

Mit einem derartigen Rückholelement, bspw. einem Federelement das auf die Rotoreinheit wirkt, wird diese gegenüber dem Drehstellungsgeber mit einer Kraft bzw. einem Drehmoment beaufschlagt. Hierdurch ist auch die Kopplung über das Eingriffselement nicht mehr kraftfrei, sondern die Zahnverbindung steht unter Spannung, so daß Spiel an dieser Stelle vermieden wird.

Die Erfindung geht von der Erkenntnis aus, daß bei Gassystemvorrichtungen im Stand der Technik, bei denen zur Kopplung von Drehstellungsgeber und Drehgasstellelement Zahnräder verwendet wurden, diese Kopplung stets weitgehend kraftfrei war. Hierdurch kommt es zu mechanischem Spiel am Eingriffselement, was sich sehr negativ auf die Genauigkeit der Ermittlung der Drehposition des Drehgasstellelements auswirkt, und so zu einer ungenauen Steuerung führt. Durch Verwendung des erfindungsgemäßen Rückholelements, das auf die Rotoreinheit wirkt, wird dieser Nachteil auf besonders einfache Weise behoben.

Erfindungsgemäß ist vorgesehen, daß der Drehstellungsgeber so ausgebildet und angeordnet ist, daß die Drehachse der Rotoreinheit parallel zur Drehachse des Drehgasstellelements liegt, aber im Abstand von dieser verläuft. Diese Anordnung hat sich im Hinblick auf die Platzverhältnisse am Griff als besonders geeignet erwiesen und führt insgesamt zu einer Einheit mit geringer axialer Länge.

Erfindungsgemäß ist das Rückholelement so angeordnet, daß es entgegen der Betätigungsrichtung des Drehgasstellelements wirkt. Die Betätigungsrichtung ist hierbei die Richtung von der Leerlaufstellung in Richtung Vollgasstellung. Besonders bevorzugt ist es, daß das Rückholelement so angeordnet ist, daß bereits in der Leerlaufstellung eine Kraft auf die Rotoreinheit wirkt, die Feder also vorgespannt ist.

Grundsätzlich können an der Gassystemvorrichtung mehrere Rückholelemente zur Rückstellung des Drehgasstellelements entgegen der Betätigungsrichtung vorgesehen sein. Als Rückholelement wird bevorzugt ein Federelement, bspw. eine Schraubenfeder verwendet. Ein solches Federelement kann am Drehgriff, am Eingriffselement oder am Drehstellungsgeber angeordnet sein. Auch die Verwendung von mehreren Federelementen ist möglich. Besonders bevorzugt ist es, als einziges Rückholelement das Federelement an der Rotoreinheit zu verwenden.

Das erfindungsgemäße Rückholelement an der Rotoreinheit kann grundsätzlich in jeder beliebigen Weise ausgebildet sein. Bevorzugt wird einerseits die Ausbildung als Spiralfeder, die um die Drehachse der Rotoreinheit herum angeordnet ist, und andererseits die Verwendung eines Zugseils, das auf die Rotoreinheit wirkt. Eine Spiralfeder benötigt nur sehr wenig Platz. Ein Zugseil kann bspw. mit einem Ende an einer Zugfeder und mit dem anderen Ende an der Rotoreinheit befestigt sein. Bei Drehung der Rotoreinheit kann es sich mindestens teilweise auf einem Seilführungselement aufrollen. Bei einer solchen Anordnung besteht eine hohe Flexibilität der Gestaltung, da die eigentliche Feder an einer fast beliebigen Stelle, auch in einiger Entfernung von der Rotoreinheit angeordnet werden kann. Zudem können über ein derartiges Zugseil auch erhebliche, für die Rückstellung des Gesamtsystems ausreichende Kräfte leicht aufgebracht werden. Auch ein gewünschter definierter Kräfteverlauf (Kraft/Weg-Kennlinie) kann auf diese Weise leicht eingestellt werden.

Gemäß einer Weiterbildung der Erfindung ist ferner vorgesehen, daß das Eingriffselement, das zur Kopplung des Drehgasstellelements mit der Rotoreinheit dient, in der Drehachse des Drehgasstellelements angeordnet und mit diesem verdrehbar ist. Zusätzlich ist ein Axiallager für das Eingriffselement vorgesehen, um eine Axialposition zu erhalten, bei der der Eingriff gewährleistet ist.

Bei der erfindungsgemäßen Lösung gemäß Anspruch 7 ist der Drehstellungsgeber axial neben dem Drehgasstellelement angeordnet, wobei die Drehachse der Rotoreinheit im wesentlichen mit der Drehachse des Drehgasstellelements identisch ist. Bei einer solchen Anordnung des Drehstellungsgebers wird erfindungsgemäß vorgeschlagen, daß axial zwischen dem Drehgasstellelement und der Rotoreinheit eine Zwischenkopplungseinheit vorgesehen ist. Die Zwischenkopplungseinheit ist sowohl mit dem Drehgasstellelement als auch mit der Rotoreinheit drehfest verbunden. Die Kopplung ist aber so ausgestaltet, daß evtl. auftretende Querbelastungen nicht übertragen werden.

Bei der Verwendung eines Drehgriffes können zum Teil erhebliche Kräfte in Querrichtung des Lenkerelements auftreten. Durch die erfindungsgemäße Zwischenkopplungseinheit wird vermieden, daß derartige Querbelastungen vom Drehgasstellelement auf den Drehstellungsgeber übertragen werden, und hier zu Ungenauigkeiten oder sogar Verschleiß und Beschädigungen führen können.

Die Zwischenkopplungseinheit ist aber mit den beiden neben ihr angeordneten Elementen drehfest verbunden, so daß die Drehbewegung im wesentlichen spielfrei übertragen wird.

Für die Ausgestaltung der Zwischenkopplungseinheit wird die Verwendung eines Elements vorgeschlagen, das - wenigstens in geringem Maße - eine Neigung gegenüber den hiermit verbundenen Einheiten erlaubt. Bevorzugt wird die Drehbewegung dennoch - quasi in Form eines Kardangelenks - im wesentlichen spielfrei übertragen.

Gemäß einer Weiterbildung der Erfindung ist die Zwischenkopplungseinheit im wesentlichen scheibenförmig mit axialen Eingriffsvorsprüngen ausgebildet. Hierbei sind mindestens zwei Eingriffsvorsprünge in Richtung der Rotoreinheit, und mindestens zwei weitere Eingriffsvorsprünge in Richtung des Drehgasstellelements gerichtet, und greifen zur Erzeugung einer drehfesten Verbindung in entsprechende Aussparungen dort axial verschiebbar ein. Besonders bevorzugt ist die Zwischenkopplungseinheit nicht gelagert, sondern frei zwischen den axial benachbarten Einheiten angebracht. Mit einer derartigen im wesentlichen scheibenförmig ausgebildeten Zwischenkopplungseinheit wird die oben beschriebene Funktion auf besonders einfache und platzsparende Weise realisiert.

Im folgenden werden Weiterbildungen der Erfindung angegeben, die sowohl für elektronische Gassystemvorrichtungen nach Anspruch 1 als auch nach Anspruch 7 verwendet werden können.

Bevorzugt kann ein Rückstellelement gebildet sein durch ein federbelastetes Zugseil, das an einem im wesentlichen ringförmigen Seilführungselement befestigt ist. Das Seilführungselement ist mit der Rotoreinheit oder mit dem Drehgasstellelement drehfest gekoppelt. Das Seilführungselement verfügt über eine mindestens abschnittsweise keilförmig ausgebildete Seilführungsnut, in der das Seil geführt ist. Bei Betätigung des Drehgasstellelements legt sich das Zugseil in die Seilführungsnut. Durch die keilförmige Ausbildung kann eine gewünschte Reibung des Zugseils erreicht werden. Dies kann durch Verwendung eines reibungserhöhenden Belags in der Nut noch verstärkt werden. Die entsprechende Reibungskraft ist für den Benutzer bei der Betätigung des Drehgasstellelements spürbar und zeigt sich in der Kraft/Weg-Kennlinie als Hysterese. Durch geeignete Einstellung dieser Reibungskraft, bevorzugt unterstützt durch geeignete Auswahl der Federkennlinie und geeigneten radialen Verlauf der Seilführungsnut kann eine gewünschte Kraft/Weg-Kennlinie sehr flexibel eingestellt werden.

Für den Drehstellungsgeber kann prinzipiell jeder Typus eines bekannten Drehsensors verwendet werden. Besonders bevorzugt wird einerseits ein Halleffekt-Drehsensorelement und andererseits ein induktiver Drehsensor.

Bei einem Halleffekt-Drehsensorelement ist bevorzugt an der Rotoreinheit ein Magnetelement angeordnet. Die Statoreinheit besteht aus zwei sich gegenüberliegenden Statorteilelementen, zwischen denen wenigstens eine Abstandsausnehmung angeordnet ist. In wenigstens einer Abstandsausnehmung ist ein Hall-Element angeordnet, das bevorzugt als Hall-ASIC-Element ausgebildet ist. Bei Drehung der Rotoreinheit bewirkt das Magnetele-ment eine Änderung des magnetischen Flusses in der Statoreinheit. Dieser wird in den Luftspalten durch mindestens ein, bevorzugt zwei Hall-Elemente gemessen. Hieraus läßt sich die Drehposition der Rotoreinheit gegenüber der Statoreinheit ermitteln.

Bei einem bevorzugten speziell ausgebildeten Halleffekt-Drehsensorelement sind die Statorelemente teilringförmig. Ein erstes Statorringelement erstreckt sich in einem Winkelbereich von 100° bis 140°, und ein zweites Statorringelement in einem Bereich von 220° bis 260°. Die als Länge angegebenen Winkelwerte bezeichnen hier die Breite des Winkelbereichs (als Teil eines 360° Vollkreises), über die sich die Elemente erstrecken. Ein solcher Sensor ist besonders geeignet zur Erfassung eines Drehwinkels zwischen 0° und 120°, wie er bei einem Drehgriff benötigt wird. Weiter bevorzugt ist es, daß das Magnetelement als teilringförmiges Magnetsegmentelement ausgebildet ist und eine Länge von ca. 100° bis 150° aufweist. Details zu einem allgemeinen Halleffekt-Drehsensor, der allerdings nicht speziell für den Einsatz als Drehstellungsgeber in einem erfindungsgemäßen Gassystem angepaßt ist, sind der DE-A-197 16 985 der Anmelderin zu entnehmen.

Der alternativ bevorzugte induktive Drehsensor verfügt an der Rotoreinheit über ein induktives Kopplungselement und an der Statoreinheit über einen Spulenschaltkreis mit min- destens zwei Spulen. Die induktive Kopplung der beiden Spulen ist abhängig von der Position des Koppelelements. Wiederum ist bevorzugt, daß der Spulenschaltkreis teilring-förmig ist und einen Winkelbereich zwischen 100° und 140° eines Vollkreises umfaßt. Besonders bevorzugt ist das induktive Kopplungselement ein Resonanzkreis mit mindestens einer Induktivität und einer Kapazität. Details zu einem entsprechenden Sensor sind bspw. in der WO-A-2003038379 beschrieben. Der hier dargestellte lineare Positionssensor wird durch einen ring- oder teilringförmigen Spulenschaltkreis zu einem Drehsensor.

Bei der weiteren erfindungsgemäßen Lösung gemäß Anspruch 16 ist - unabhängig davon, ob der Drehstellungsgeber in der Drehachse des Drehgasstellelements oder im Abstand hiervon angeordnet ist - ein spezieller Halleffekt-Drehsensor vorgesehen, wie er oben bereits erläutert wurde. Ein erstes Statorringelement ist 100° bis 140° lang, ein zweites Statorringelement 220° bis 260°. Bevorzugt weist die Rotoreinheit ein teilringförmiges Magnetsegmentelement einer Länge von 100° bis 150° auf, das auf einem Magnethalteelement angeordnet ist.

Der vorgeschlagene Sensor ist speziell für den Einsatz an einem Gasdrehgriff angepaßt und bietet in dem hier interessierendem Winkelbereich eine hohe Auflösung und Genauigkeit.

Bei der weiteren erfindungsgemäßen Lösung gemäß Anspruch 18 ist - wiederum unabhängig von der Anordnung des Drehstellungsgebers - ein spezieller induktiver Sensor vorgesehen. Dieser ist speziell für den Einsatz an einem Gasdrehgriff angepaßt und bietet in dem hier interessierenden Winkelbereich eine hohe Auflösung und Genauigkeit. Hierbei ist der Spulenschaltkreis teilringförmig ausgebildet und erstreckt sich über einen Winkelbereich von 100°-140°.

Nachfolgend werden Ausführungsformen der Erfindung anhand von Zeichnungen näher beschrieben. In den Zeichnungen zeigen:
- Fig. 1: ein allgemeines elektronisches Gassystem für Motorräder in einer schematischen, perspektivischen Teildarstellung;
- Fig. 2: das allgemeine elektronische Gassystem aus Fig. 1 in einer schematischen Schnittdarstellung;
- Fig. 3: Teile einer ersten Ausführungsform eines elektronischen Gassystems in einer perspektivischen Darstellung;
- Fig. 4: eine Sensoreinheit des Gassystems aus Fig. 3 in einer perspektivischen Ansicht;
- Fig. 5: in einer perspektivischen Explosionsansicht Teile der Sensoreinheit aus Fig. 4;
- Fig. 6: Teile einer Statoreinheit eines induktiven Sensors der Sensoreinheit aus Fig. 4, Fig. 5 in einer perspektivischen Explosionsdarstellung;
- Fig. 6a: in einer perspektivischen Darstellung Statorteilelelemente der Statoreinheit aus Fig. 6;
- Fig. 6b: in einer perspektivischen Darstellung eine Rotoreinheit des induktiven Sensors aus Fig. 5;
- Fig. 7: in einer perspektivischen Explosionsdarstellung eine zweite Ausführungsform einer Sensoreinheit mit induktivem Sensor;
- Fig. 7a: ein induktives Koppelelement des induktiven Sensors aus Fig. 7;
- Fig. 7b: ein Spulenschaltkreis des induktiven Sensors aus Fig. 7;
- Fig. 8a: eine perspektivische Vorderansicht einer dritten Ausführungsform einer Sensoreinheit;
- Fig. 8b: eine perspektivische Rückansicht der Sensoreinheit aus Fig. 8a;
- Fig. 9: in einer perspektivischen Vorderansicht eine geöffnete Sensoreinheit gemäß Fig. 8;
- Fig. 10: die Sensoreinheit aus Fig. 8a, 8b in einer perspektivischen Explosionsdarstellung;
- Fig. 11: Ansicht eines Querschnitts durch eine vierte Ausführungsform einer Sensoreinheit mit Seilzug-Feder;
- Fig. 12: eine Längsschnitt-Darstellung der Sensoreinheit aus Fig. 11;
- Fig. 12a: eine Querschnittsansicht entlang der Linie A...A' in Fig. 12;

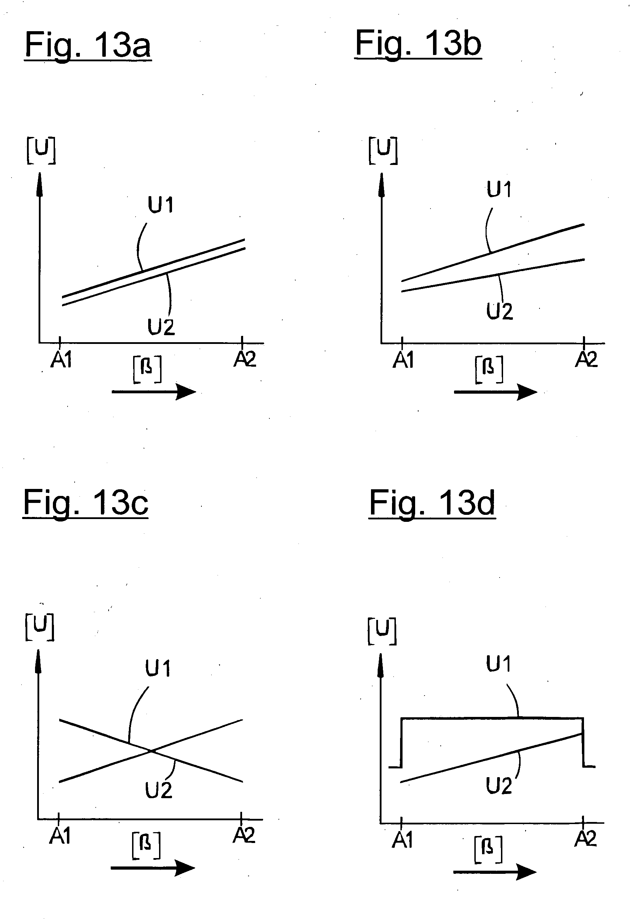

- Fig. 13a - 13d: verschiedene Ausgangskennlinien eines Drehstellungsgebers;
- Fig. 14: eine perspektivische Ansicht eines Rückstellelements.

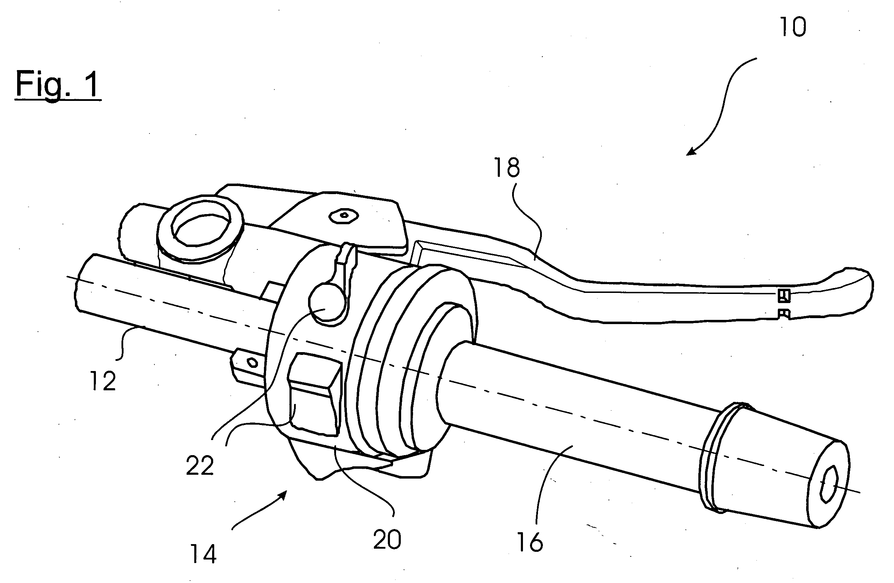

In Fig. 1 ist allgemein ein elektronisches Gassystem 10 für ein Motorrad gezeigt. Am rechten Ende eines Lenkerrohrs 12, das in Fig. 1 nur teilweise dargestellt ist, ist eine Handbetätigungseinheit 14 angeordnet mit einem Drehgriff 16, einem Handhebel 18 und einem Funktionselementgehäuse 20 mit Funktionselementen 22. Das Gasgeben erfolgt mittels der Hand, die als Drehgasstellelement den Drehgriff 16 umfaßt und dreht. Mit derselben Hand werden auch die Funktionselemente 22 und der Handhebel 18 bedient. Obwohl die Handbetätigungseinheit 14 im gezeigten Beispiel am rechten Ende des Lenkerrohres 12 angebracht ist, kann sie sich in einer alternativen Ausführungsform auch am linken Ende befinden.

Das elektronische Gassystem 10 umfaßt zur Verstellung der Drosselklappe des Motorrads keinen herkömmlichen Bowdenzug, sondern die Stellung des Drehgriffs 16 wird mittels eines Sensors ermittelt und als elektrisches Signal weiterverarbeitet. Der Drehgriff läßt sich von einer Leerlaufstellung in einer Betätigungsrichtung bis zu einer Vollgasstellung drehen.

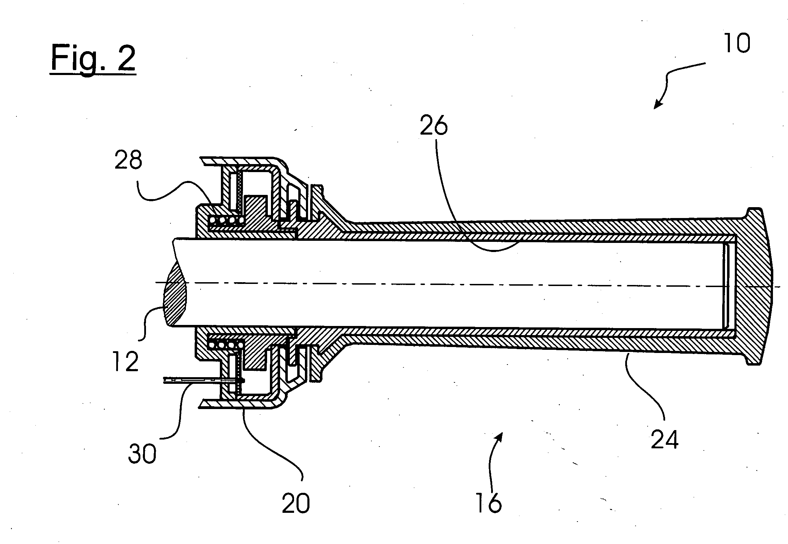

Wie in der Schnittansicht Fig. 2 zu sehen, besteht das Drehgasstellelement 16 aus einem äußeren Gummiüberzug 24, der über eine Lagerbuchse 26 gezogen ist. Die Lagerbuchse 26 ist auf dem Lenkerrohr 12 verdrehbar. Axial neben dem Drehgasstellelement 16 ist das Funktionselementgehäuse 20 angeordnet, in dem sich eine Rückstellfedereinheit 28 (hier in Form einer Schraubenfeder) und ein in Fig. 2 nicht näher dargestellter Positionssensor für die Position des Drehgasstellelements 16 befindet, der über ein Anschlußkabel 30 angeschlossen ist.

Nach dieser allgemeinen Darstellung eines elektronischen Gassystems für ein Motorrad sollen nun verschiedene Ausführungsformen der Erfindung beschrieben werden.

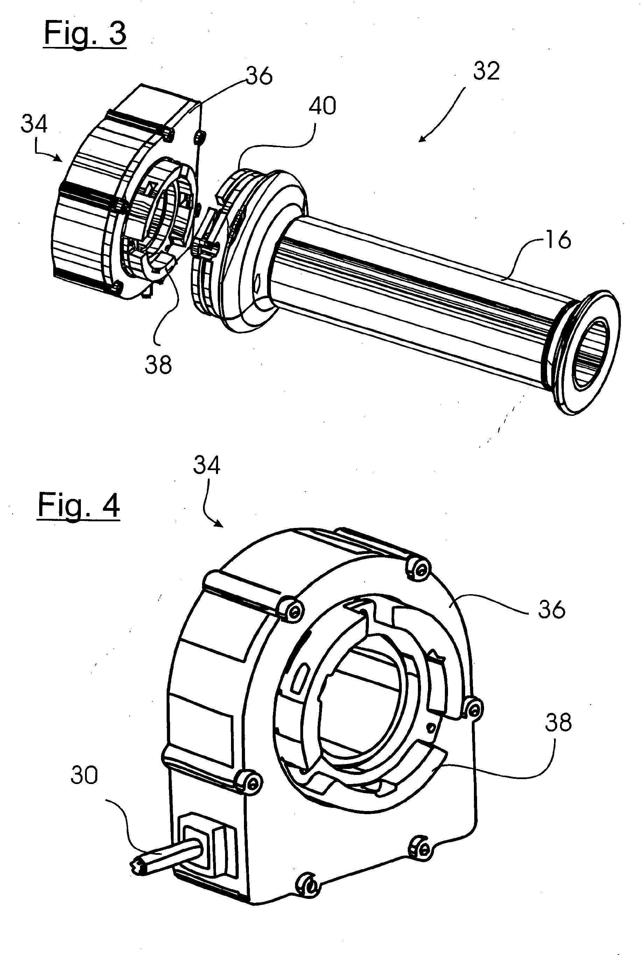

Fig. 3 zeigt ein elektronisches Gassystem 32 gemäß einer ersten Ausführungsform der Erfindung, bestehend aus einem Drehgriff 16 und einer Sensoreinheit 34. Die Sensoreinheit 34 weist ein Gehäuse 36 und einen Rotoranschluß 38 auf, mit dem der Drehgriff 16 durch Aufstecken zu verbinden ist.

Wie aus Fig. 3 ersichtlich weist der Drehgriff 16 einen Seilführungsring 40 mit einer umlaufenden Kerbe auf, zur optionalen Aufnahme eines klassischen Baudenzugs. Der Seilführungsring 40 ist ein lediglich optionales Element des Gassystems 32.

In Fig. 4 ist die Sensoreinheit 34 noch einmal separat dargestellt. Im Inneren des Gehäuses 36 befindet sich ein Drehsensor zur Ermittlung der Drehposition der Rotoranschlußeinheit 38, der elektrisch über das Anschlußkabel 30 angeschlossen ist. Der Sensor wird im folgenden näher erläutert.

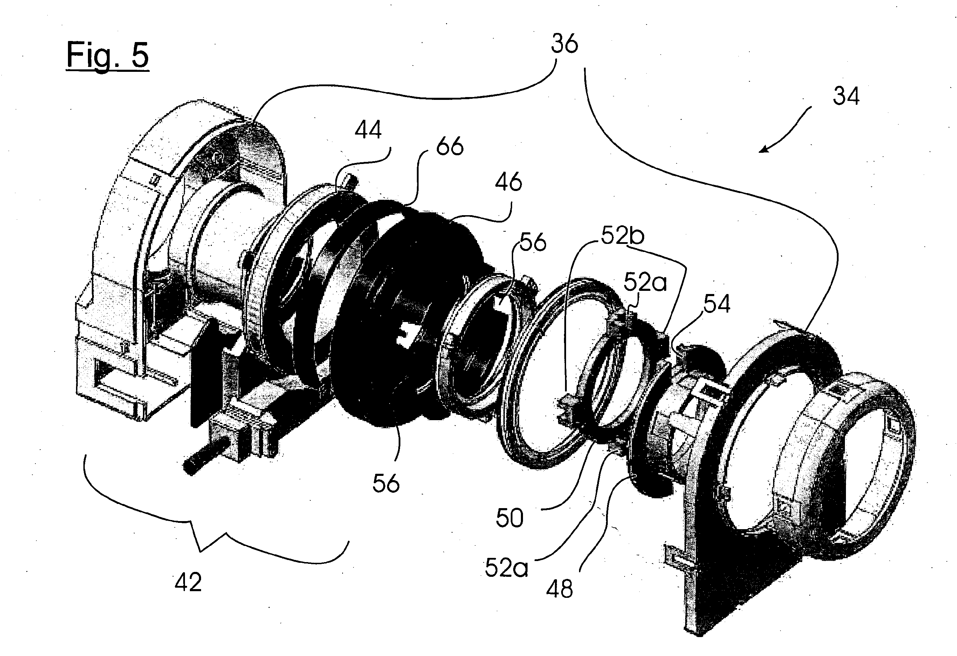

In der Explosionsdarstellung in Fig. 5 ist der Aufbau der Sensoreinheit 34 dargestellt. Das zweiteilige Gehäuse 36 umfaßt einen Hall-Drehsensor 42 mit einer Statoreinheit 44 und einer davor drehbaren Rotoreinheit 46.

Der Drehstellungsgeber 42 ist somit bei der ersten Ausführungsform in der Drehachse des Drehgriffs 16 angeordnet. Die Drehachse der Rotoreinheit 46 ist mit der Drehachse des Drehgriffs 16 identisch.

Weiter befindet sich im Inneren des Gehäuses 36 eine Griffkupplungseinheit 48, in die der aufzusteckende Drehgriff 16 (siehe Fig. 3) zur drehfesten, spielfreien Verbindung einrastet.

Axial zwischen der Rotoreinheit 46 und der Griffkupplungseinheit 48 befindet sich als Zwischenkupplungselement eine Kreuzscheibe 50.

Die Kreuzscheibe 50 dient zur drehfesten Kopplung zwischen der Griffkupplungseinheit 48 und der Rotoreinheit 46. Durch die besondere Ausgestaltung der Kreuzscheibe 50 wird hierbei einerseits eine im wesentlichen spielfreie Übertragung der Drehbewegung zwischen diesen Elementen gewährleistet, während andererseits Querbelastungen, die am Drehgriff 16 auftreten können, nicht oder nur in stark verringertem Maße auf den Sensor 42 übertragen werden.

Hierzu weist die Kreuzscheibe 50 Eingriffsvorsprünge 52a, 52b auf, die jeweils paarweise diametral einander gegenüber angeordnet sind. Hiervon sind erste Eingriffsvorsprünge 52a so angeordnet, daß sie axial in Richtung der Griffkupplungseinheit 48 vorstehen, während zweite Eingriffsvorsprünge 52b so angeordnet sind, daß sie axial in Richtung der Rotoreinheit 46 vorstehen.

Die Griffkupplungseinheit 48 weist entsprechende Aussparungen 54 auf, in die die ersten Eingriffsvorsprünge 52a bei der zusammengebauten Sensoreinheit 34 eingreifen. Entsprechend weist die Rotoreinheit 46 Aussparungen 56 auf, in die die zweiten Eingriffsvorsprünge 52b eingreifen.

Treten an der zusammengebauten Sensoreinheit 34 vom Drehgriff 16 herrührende Querbelastungen auf, so werden diese über die Kreuzscheibe 50 nicht weitergegeben. Stattdessen kommt es zu einer (allerdings sehr geringen) Kippbewegung zwischen der Kreuzscheibe 50 und den axial benachbarten Einheiten, Rotoreinheit 46 und Griffkupplungseinheit 48. Hierbei können sich die Eingriffsvorsprünge 52a, 52b axial in geringem Maße in den Aussparungen 54, 56 bewegen. So wird die Übertragung von Querbelastungen vermieden, während die Drehbewegung im wesentlichen spielfrei übertragen wird.

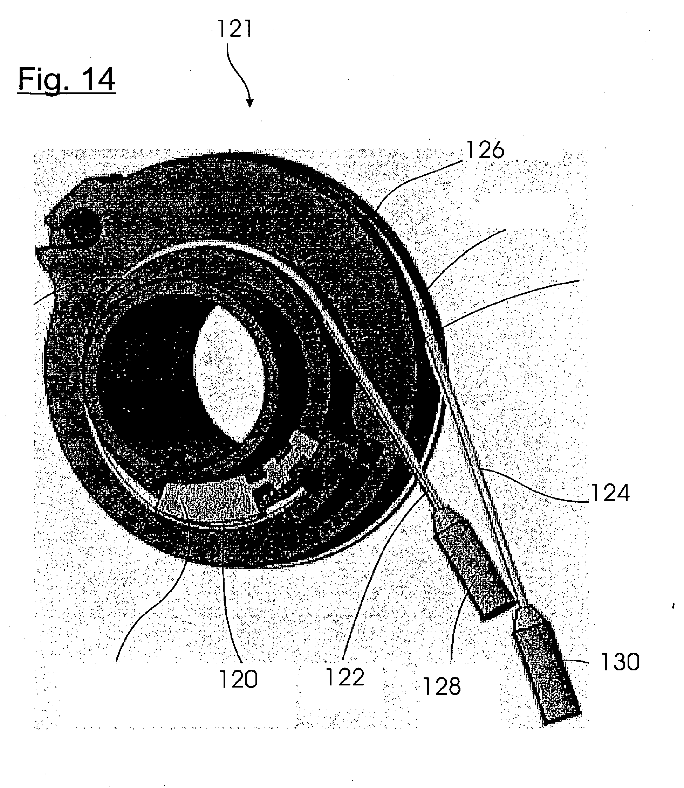

In Fig. 5 ist kein Rückholelement dargestellt. Ein Rückholelement in beliebiger Form, bspw. wie nachfolgend im Zusammenhang mit Fig. 14 erläutert, kann an beliebiger Stelle der Einheit vorgesehen sein.

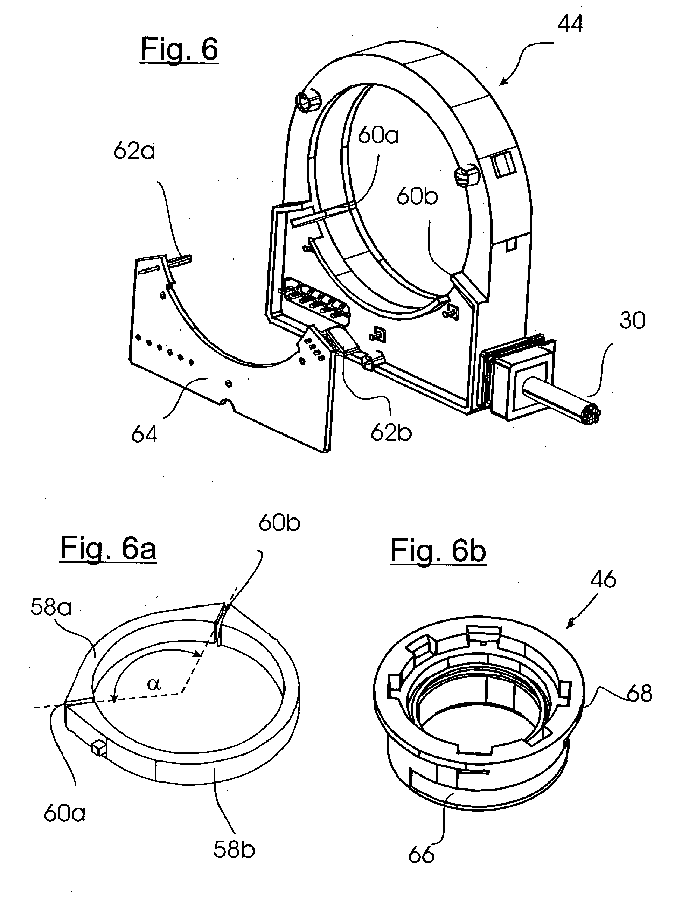

In Fig. 6 ist die Statoreinheit 44 des nach dem Hall-Prinzip arbeitenden Drehstellungsgebers 42 dargestellt. Die Statoreinheit 44 ist im wesentlichen ringförmig und umfaßt zwei in Fig. 6a separat dargestellte Statorteilelemente 58a, 58b, die zwischen sich in einem Winkel α von etwa 120° Abstandsausnehmungen 60a, 60b freilassen. Die Statorteilelemente 58a, 58b bestehen aus magnetisch leitendem Material und sind in der aus Kunststoff bestehenden Statoreinheit 44 eingebettet. Der Winkel bestimmt damit gleichfalls, daß das erste Statorringelement 58a etwa 120° und das zweite Statorringelement 58b etwa 240° lang ist. Prinzipiell wäre es ausreichend, in nur einer der Lufspalte bildenden Abstandsausnehmungen 60a, 60b einen Magnetfeld-Sensor anzuordnen. Bevorzugt sind jedoch in beiden Luftspalten 60a, 60b jeweils Hall-ASIC-Elemente 62a, 62b angeordnet, die mit einer dahinter angeordneten Leiterplatte 64 verbunden sind. An die Leiterplatte 64 ist das Anschlußkabel 30 angeschlossen.

Die in Fig. 6b noch einmal separat dargestellte Rotoreinheit 64, die sich wie Fig. 5 zeigt, vor der Statoreinheit 44 dreht, besteht aus einem ringförmigen Magnethalteelement 68, auf dem ein Magnetsegmentelement 66 angeordnet ist. Das Magnetsegmentelement 66 ist teilringförmig und etwa 120° lang und kann damit entsprechend vor beiden ASICs 60a, 60b so verstellt werden, wie eine den Drehgriff 16 haltende Hand im Handgelenk bewegt werden kann. Damit ist der Drehstellungsgeber 42 physiologisch optimal angepaßt.

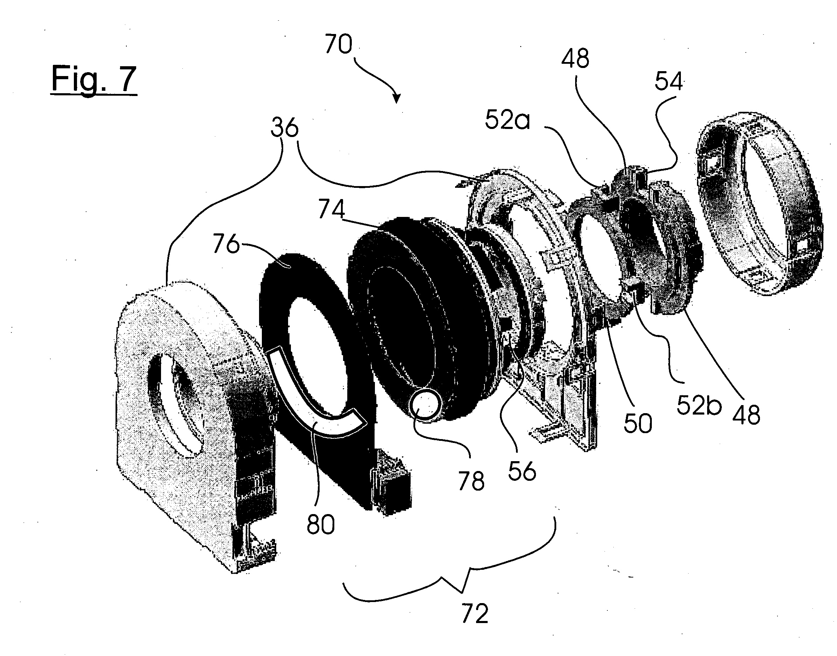

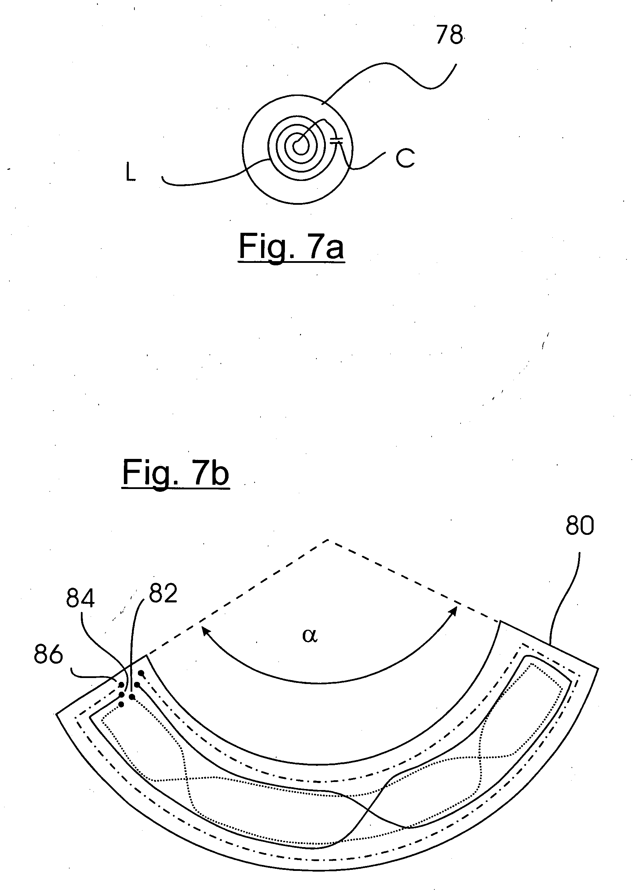

In Fig. 7 ist eine Sensoreinheit 70 einer zweiten Ausführungsform eines elektronischen Gassystems in einer Explosionsdarstellng gezeigt. Die Sensoreinheit 70 umfaßt einen induktiven Sensor 72 mit einer Rotoreinheit 74 und einer Statoreinheit 76. Da die Einheit im übrigen weitgehend entsprechend der Sensoreinheit 34 gemäß der ersten Ausführungsform aufgebaut ist (vgl. Fig. 5), werden für vergleichbare Teile identische Bezugszeichen verwendet.

Wie bei der ersten Ausführungsform ist auch bei der zweiten Ausführungsform der Drehstellungsgeber 72 in der Drehachse des Drehgriffs 16 angeordnet.

Wie bei der ersten Ausführungsform umfaßt die Sensoreinheit 70 eine Griffkupplungseinheit 48, die über eine Kreuzscheibe 50 mit der Rotoreinheit 74 gekoppelt ist, wobei erste und zweite Eingriffsvorsprünge 52a, 52b in Aussparungen 54 an der Griffkupplungseinheit und Aussparungen 56 an der Rotoreinheit 74 eingreifen. Auch hier erfüllt die Kreuzscheibe 50 die Funktion einer drehfesten Kopplung der Rotoreinheit 74 an den Drehgriff 16, wobei aber Querbelastungen nicht übertragen werden.

In der dargestellten Sensoreinheit 70 gemäß der zweiten Ausführungsform wird als Geberelement der induktive Sensor 72 verwendet, bei dem auf der Statoreinheit 76 der teilkreisförmige Spulenschaltkreis 80 angeordnet ist und auf der Rotoreinheit 74 das induktive Koppelelement 78.

Verwendet wird hier ein induktiver Sensor wie er in der WO-A-2003 038 379 beschrieben ist. Wie in Fig. 7b dargestellt umfaßt der Spulenschaltkreis 80 drei als Leiterbahnen mit räumlicher Struktur ausgebildete Spulen 82, 84, 86, darunter eine Sinus-Erregerspule 82, eine hierzu räumlich phasenverschobene Kosinus-Erregerspule 84 und eine Empfangsspule 86. Vor dem Spulenschaltkreis 80 bewegt sich wie in Fig. 7 gezeigt als induktives Kuppelelement 78 ein sog. "Puck", d. h. ein Resonanzkreis aus einer Induktivität L und einer Kapazität C wie in Fig. 7a dargestellt. Wie in WO-A-2003 038 379 im Detail erläutert, bewirkt der Resonanzkreis 78 eine positionsabhängige Kopplung zwischen den beiden Erregerspulen 82, 84 und der Empfängerspule 86, so daß bei geeigneter Erregung der Erregerspulen die Phase des in der Empfängerspule 86 induzierten Signals ausgewertet werden kann, um die genaue Position des induktiven Koppelelements 78 vor dem Spulenschaltkreis 80 zu erhalten.

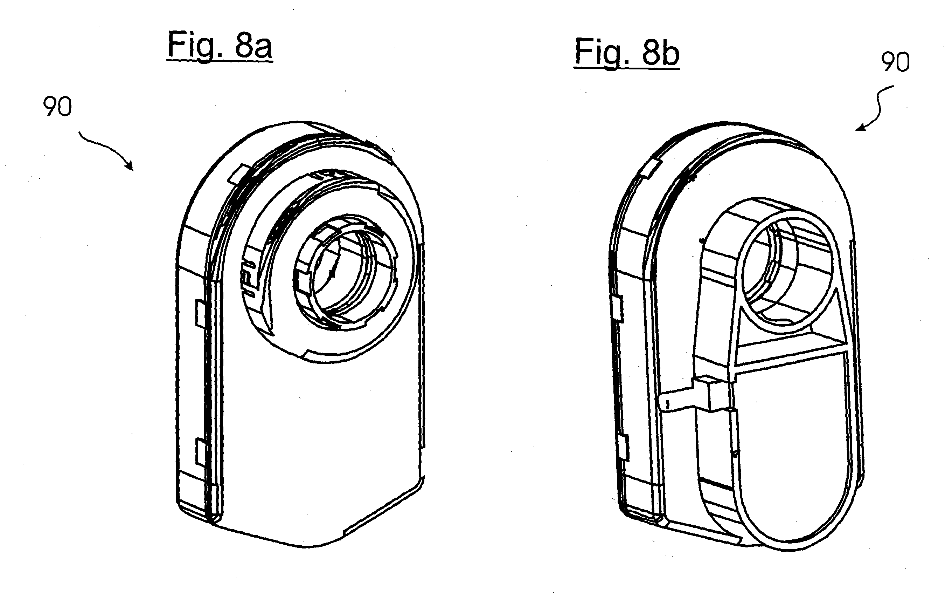

In den Fig. 8a, 8b sind in perspektivischer Ansicht Vorder- und Rückseite einer dritten Ausführungsform einer Sensoreinheit 90 gezeigt. Während die Sensoreinheit 90 der dritten Ausführungsform in einigen Elementen mit den Sensoreinheiten der ersten und zweiten Ausführungsform übereinstimmt, so daß auch hier für vergleichbare Einheiten identische Bezugszeichen verwendet werden, unterscheidet sich die dritte Ausführungsform von den beiden vorausgehenden dadurch, daß der verwendete Drehsensor nicht in der Drehachse des Drehgriffs 16 angeordnet ist, sondern außerhalb dieser.

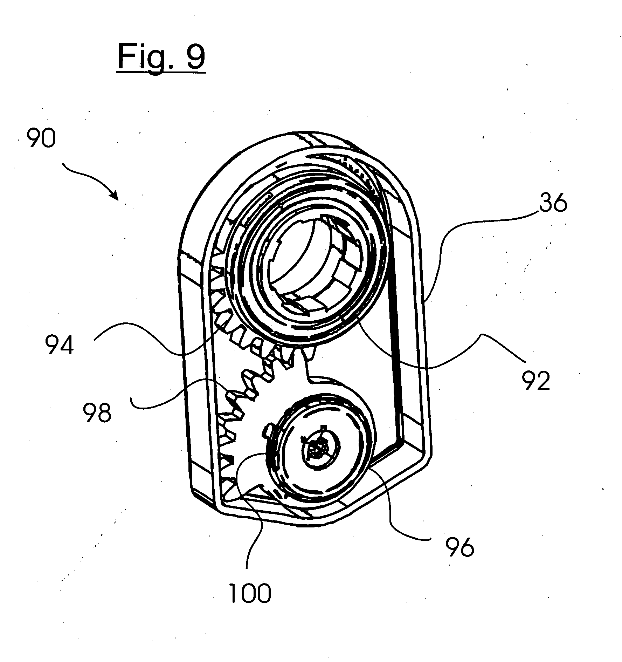

Wie in Fig. 9 dargestellt befindet sich bei der Sensoreinheit 90 innerhalb des Gehäuses 36 ein ringförmig ausgebildetes Eingriffselement 92, das an einem Teil seines Umfangs mit einer Verzahnung 94 ausgestattet ist. Das Eingriffselement 92 ist drehfest mit dem Drehgriff 16 gekoppelt, wobei seine Drehachse mit der des Drehgriffs 16 zusammenfällt.

Im Eingriff mit der Verzahnung 94 befindet sich eine Verzahnung 98 einer Sensorwelle 96. Die Sensorwelle 96 ist innerhalb des Gehäuses 36 so angeordnet, daß sie um eine Drehachse parallel zur Drehachse von Drehgriff 16 und Eingriffselement 92, aber im Abstand von dieser angeordnet drehbar ist. Über die ineinander eingreifenden Verzahnungen 94, 98 sind Eingriffselement 92 und Sensorwelle 96 gekoppelt, so daß eine Drehbewegung des Drehgriffs 16 auf die Sensorwelle 96 übertragen wird. Hierbei ist an der Sensorwelle 96 ein Rückholelement 100 in Form einer um die Sensorwelle 96 herum angeordnete Spiralfeder angeordnet. Die Spiralfeder 100 wirkt so, daß sie die Sensorwelle 96 entgegen der Betätigungsrichtung des Drehgriffs 16 zurückstellt. Durch die Spiralfeder 100 wird ein Rückstellmoment an der Sensorwelle 96 erzeugt, so daß der Eingriff zwischen den Zähnen 94, 98 nicht kraftfrei ist, sondern unter Spannung steht. So wird erreicht, daß die Kopplung zwischen dem drehfest mit dem Drehgriff 16 gekoppelten Eingriffselement 92 und der Sensorwelle 96 spielfrei ist, damit an der Sensorwelle 96 die Drehstellung des Drehgriffs 16 sehr genau abgefragt werden kann und so mit eine genaue Gassteuerung mit dem Drehgriff 16 möglich ist.

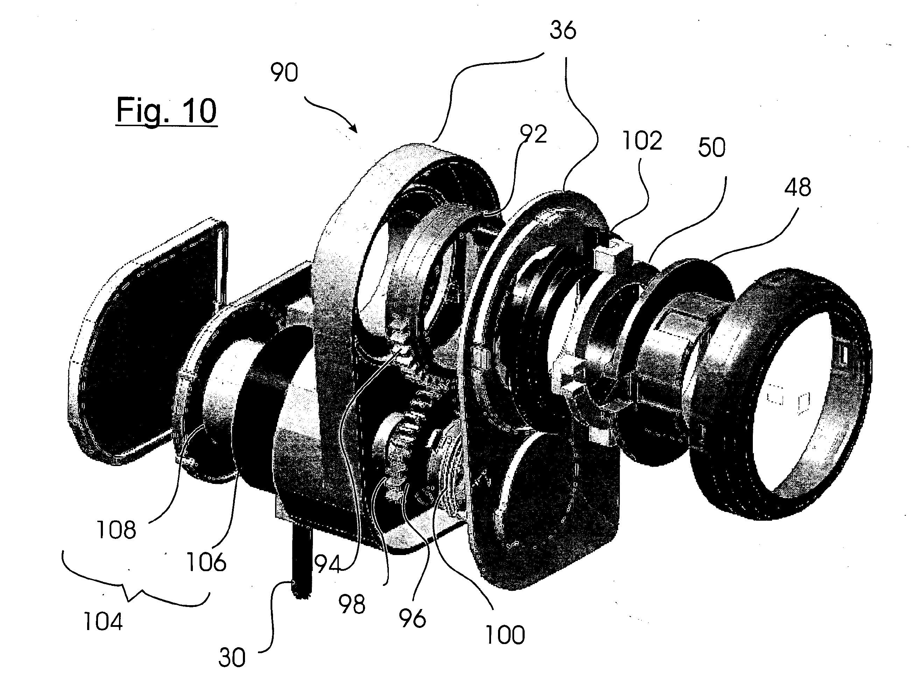

In Fig. 10 sind die Bestandteile der Sensoreinheit 90 in einer Explosionsdarstellung dargestellt. Hier sind im Gehäuse 36 Eingriffselemente 92 mit Verzahnung 96 und Sensorwelle 96 mit Verzahnung 98 und Rückstellfeder 100 noch einmal gezeigt. Wie bei der ersten und zweiten Ausführungsform ist eine Griffkuppeleinheit 48 zur drehfesten Verbindung mit dem Drehgriff 16 vorhanden, die über die Kreuzscheibe 50 mit dem Übertragungsring 102 drehfest verbunden ist. Der Übertragungsring 102 dreht seinerseits mit dem Eingriffselement 92. Die zur Vermeidung von Querbelastungen vorgesehene Kreuzscheibe 50 ist bei dieser Ausführung optional, da der Sensor 104 ohnehin nicht in der Drehachse des Griffs 16 angeordnet ist.

An der Sensorwelle 96 ist wie bei der ersten Ausführungsform ein Halleffekt-Drehstellungsgeber 104 mit einer mit der Sensorwelle 96 fest verbundenen Rotoreinheit 106 und Statoreinheit 108 angeordnet. Der Stator 106 verfügt über ein teilringförmiges Magnetelement einer Länge von ca. 120°. Der Stator weist wie bei der ersten Ausführungsform teilringförmige Statorsegmentelemente mit dazwischen angeordneten Hall-ASICs auf, die über das Anschlußkabel 30 angeschlossen sind.

Bei Drehung eines an der Griffkupplungseinheit 48 angeschlossenen Drehgriffs 16 wird dessen Drehung über Kreuzscheibe 50, Übertragungsring 102, Eingriffselement 92 und Verzahnung 94, 98 auf die Sensorwelle 96 übertragen, so daß sich die Rotoreinheit 106 gegenüber der Statoreinheit 108 dreht. Aufgrund der Federbelastung durch Federelement 100 ist die Übertragung zwischen den Zähnen 94, 98 spielfrei. Die Drehposition des Griffs 16 wird somit vom Drehstellungsgeber 104 sehr genau abgefragt.

In einer weiteren Ausführungsform (nicht dargestellt) ist zwar wie in der dritten Ausführungsform der Sensor außerhalb der Drehachse des Drehgriffs 16 angeordnet, aber statt des in Fig. 10 gezeigten Halleffekt-Drehstellungsgebers ist ein induktiver Drehsensor wie oben in Verbindung mit Fig. 7a, 7b beschrieben, vorgesehen.

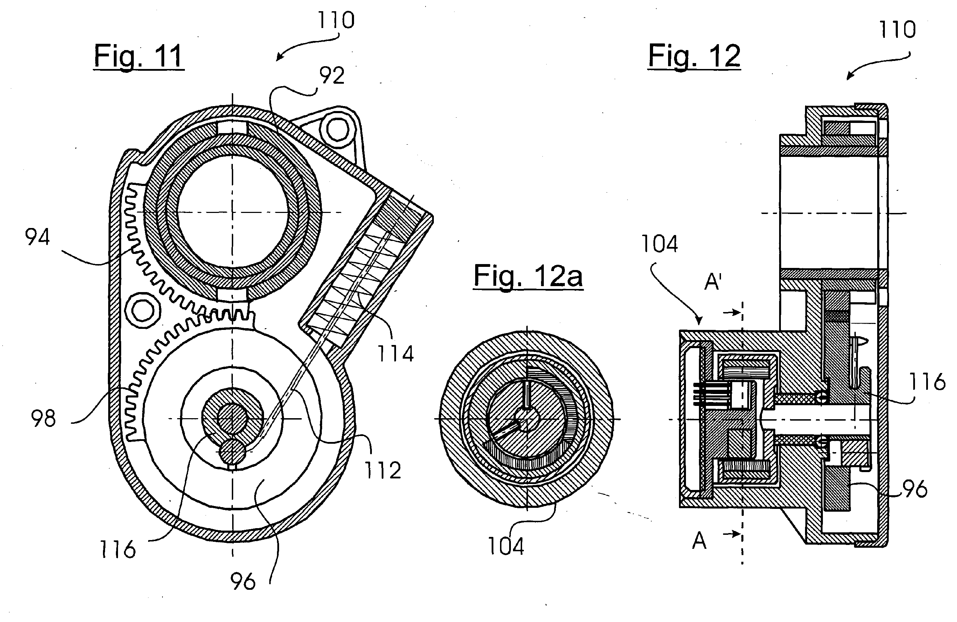

In den Fig. 11, 12 und 12a ist eine vierte Ausführungsform einer Sensoreinheit 110 gezeigt. Die vierte Ausführungsform lehnt sich eng an die dritte Ausführungsform gemäß Fig. 10 an, wobei ein Halleffekt-Drehstellungsgeber 104 an einer Sensorwelle 96 so angeordnet ist, daß seine Drehachse parallel im Abstand zur Drehachse eines Drehgriffs 16 verläuft. Der Drehstellungsgeber 104 ist über eine Verzahnung 94, 98 drehfest an den Griff 16 angekoppelt.

Im Gegensatz zur dritten Ausführungsform ist bei der vierten Ausführungsform aber als Rückholelement ein Zugseil 112 vorgesehen, das an einem ersten Ende durch ein Federelement 114 zurückgezogen wird. An der Sensorwelle 96 ist ein Seilführungsring 116 gebildet, an dem ein zweites Ende des Zugseils 112 befestigt ist. Bei einer durch Drehung des Drehgriffs 16 bewirkten Drehung der Sensorwelle 96 wird das Zugseil 112 auf dem Seilführungsring 116 teilweise aufgerollt und in einer Führung 117 aufgenommen, wobei sich die vorgespannte Feder 114 weiter spannt. Die Feder 114 wirkt somit als Rückholelement auf die Sensorwelle 96 und bewirkt spielfreien Eingriff der Verzahnung 94, 98.

Während es sowohl bei der dritten als auch vierten Ausführungsform möglich ist, daß zusätzlich zu den jeweils gezeigten Rückholelementen 100, 112, 114 an der Sensorwelle 96 weitere Rückholelemente vorgesehen sind, ist es bevorzugt, auf weitere Rückholelemente zu verzichten und nur die gezeigten Rückholelemente zu verwenden. Insbesondere mit der Feder 114 in der vierten Ausführungsform kann eine für die Rückstellung des Gesamtsystems ausreichende Kraft leicht aufgebracht werden.

Wie oben in Verbindung mit den gezeigten Halleffekt-Drehstellungsgebern erläutert können hierbei zwei Hall-ASIC-Elemente verwendet werden. In den Fig. 14a bis 14d sind verschiedene Möglichkeiten der Kombination der Ausgangssignale zweier Hall-ASIC-Elemente gezeigt. Hierbei sind die von den beiden Hall-ASIC-Elementen abgegebenen Ausgangsspannungen U1, U2 in Abhängigkeit von Drehwinkel β gezeigt. In den ASICs sind Mikrorechner mit Korrektureinheiten und einer Software integriert, die die Steigung und die Stellung beider Kurven U1 und U2 beeinflussen können. Hierdurch ist es möglich, die Steigung der Ausgangsspannung U1 und U2 unterschiedlich zu beeinflussen.

In Fig. 1a werden die Ausgangsspannungen der beiden Hall-ASIC-Elemente derselben Verarbeitung unterworfen, so daß die Ausgangsspannungen U1, U2 identisch sind und in Abhängigkeit vom Drehwinkel β leicht ansteigen. Aus darstellerischen Gründen sind beide Ausgangsspannungen untereinander gezeichnet, während die Kurven tatsächlich aufeinander fallen.

Alternativ ist es möglich, wie in Fig. 14b gezeigt, Ausgangsspannungen U1 und U2 mit unterschiedlichen Steigungen zwischen einem unteren und oberen Anschlag A1, A2 zu erhalten.

Als weitere Alternative zeigt Fig. 14c, daß die Hall-ASIC-Elemente Spannungssignale U1, U2 mit gegenläufiger Steigung abgeben können. Hierbei sind die Hall-ASIC-Elemente in den jeweiligen Abstandsausnehmungen gegeneinander um 180° gedreht angeordnet, so daß sich die in Fig. 14c dargestellten gekreuzten Kennlinien ergeben.

Wie Fig. 14d zeigt, läßt sich mit aus den Anschlägen A1, A2 regenerierten Auslösesignalen die Spannung U1 in ein Schaltsignal umformen.

Die Kennlinien in den Fig. 14a bis 14d sind für eine Überwachung des jeweiligen Gassystems einsetzbar. Sinkt z. B. die Versorgungsspannung des Systems unter einen nicht mehr die Funktion des Systems garantierenden Wert, gibt eine mit dem Drehstellungsgeber verbundene Auswerteeinheit mit einer Auswertesoftware entsprechende Überwachungssignale, die je nach Forderung berücksichtigt werden können.

Zu den beschriebenen Ausführungsformen sind eine Anzahl von Modifikationen möglich. So kann wie in Fig. 15 gezeigt als Rückholelement ein Seilführungsring 120 vorgesehen sein, an dem mindestens ein erstes Zugseil 124, und in einer speziellen, optionalen Ausgestaltung auch ein zweites Zugseil 122 befestigt ist. Die Zugseile 122, 124 sind mit einer ersten Feder 128 bzw. einer zweiten Feder 130 belastet. Am Seilführungsring 120 laufen die Zugseile 122, 124 jeweils innerhalb von keilförmigen Führungsnuten 126, so daß sich eine Reibung zwischen den Zugseilen 122, 124 und den Nuten 126 ergibt. Die Innenseiten der Nuten bestehen aus einem reibungserhöhenden Material, das dem Entlangrutschen der Zugseile 122,124 einen Bewegungswiderstand entgegensetzt. Dieser Bewegungswiderstand wirkt beim Rückstellen der Rotoreinheit und führt zu einer Bewegungshysterese, die je nach Ausgestaltung der Nut 126 und Art des gewählten reibungserhöhenden Materials beeinflußbar ist. Durch die Wahl der Federkennlinien der Federn 128,130 (bspw. exponentiell oder linear) läßt sich die Kraft/Weg-Kennlinie des Systems wie gewünscht beeinflussen.

## Patentansprüche

1. Elektronische Gassystemvorrichtung für Motorräder, die an einem Lenkerelement (12) angeordnet ist und die wenigstens aufweist
- ein Drehgasstellelement (16), das an Lenkerelement (12) in einer Betätigungsrichtung von einer Leerlaufstellung bis zu einer Vollgasstellung drehbar zu verstellen ist,
- einen Drehstellungsgeber (104), der außerhalb der Drehachse des Drehgasstellelements (16) angeordnet ist,
- wobei der Drehstellungsgeber (104) aus einer Rotor- und einer Statoreinheit (106, 108) besteht, wobei die Rotoreinheit (106) mit dem Drehgasstellelement (16) gegenüber der Statoreinheit (108) drehbar zu bewegen ist, und wobei die Drehachsen der Rotoreinheit (106) und des Drehgasstellelements (16) parallel im Abstand voneinander angeordnet sind,
- und wobei die Rotoreinheit (106) durch ein mit dem Drehgasstellelement (16) verbundenes Eingriffselement (92) zu verstellen ist, welches eine erste Anzahl von Zähnen (94) aufweist, die mit einer zweiten Anzahl von Zähnen (98) an einem Zahnelement (96) in Eingriff stehen,
- wobei das Zahnelement (96) mit der Rotoreinheit (106) gekoppelt ist oder die Rotoreinheit (106) mindestens teilweise als Zahnelement ausgebildet ist,
- und wenigstens ein Rückholelement (100,114) vorgesehen ist, das entgegen der Betätigungsrichtung so auf die Rotoreinheit (106) wirkt, daß der Eingriff zwischen den ersten und zweiten Zähnen im wesentlichen spielfrei ist.

2. Vorrichtung nach Anspruch 1, bei der
- das Rückholelement (100, 114) das einzige Rückholelement der Vorrichtung ist.

3. Vorrichtung nach einem der vorangehenden Ansprüche, bei der
- das Rückholelement (100, 114) so vorgespannt ist, daß auch in der Leerlaufstellung eine Federkraft auf die Rotoreinheit wirkt.

4. Vorrichtung nach einem der vorangehenden Ansprüche, bei der
- das Rückholelement eine Spiralfeder (100) ist, die sich um die Drehachse der Rotoreinheit (106) herum erstreckt.

5. Vorrichtung nach einem der Ansprüche 1 bis 3, bei der
- das Rückholelement (114) über ein Zugseil (112) auf die Rotoreinheit (106) wirkt.

6. Vorrichtung nach einem der vorangehenden Ansprüche, bei der
- das Eingriffselement (92) in der Drehachse des Drehgasstellelements (16) angeordnet und mit diesem verdrehbar ist,
- wobei ein Axiallager für das Eingriffselement (92) vorgesehen ist.

7. Elektronische Gassystemvorrichtung für Motorräder, die an einem Lenkerelement (12) angeordnet ist und die wenigstens aufweist
- ein Drehgasstellelement (16), das am Lenkerelement (12) drehbar zu verstellen ist,
- einen Drehstellungsgeber (42, 72), der aus einer Rotor- und einer Statoreinheit (46, 47; 44, 76) besteht, wobei die Rotoreinheit (46, 74) mit dem Drehgasstellelement (16) gegenüber der Statoreinheit (44, 76) drehbar zu bewegen ist,
- wobei der Drehstellungsgeber (42, 72) axial neben dem Drehgasstellelement (16) angeordnet ist und die Drehachse der Rotoreinheit (46, 74) im wesentlichen mit der Drehachse des Drehgasstellelements (16) identisch ist,
- wobei axial zwischen dem Drehgasstellelement (16) und der Rotoreinheit (46, 74) eine Zwischenkopplungseinheit (50) vorgesehen ist, die sowohl mit dem Drehgasstellelement (16) als auch mit der Rotoreinheit (46, 74) drehfest verbunden ist, aber evtl. auftretende Querbelastungen nicht überträgt.

8. Vorrichtung nach Anspruch 7, bei der
- die Zwischenkopplungseinheit (50) im wesentlichen scheibenförmig mit axialen Eingriffsvorsprüngen (52a, 52b) ausgebildet ist,
- wobei jeweils mindestens zwei Eingriffsvorsprünge (52a, 52b) in Aussparungen (54, 56) der Rotoreinheit (46, 74) und des Drehgasstellelements (16) oder eines mit dem Drehgasstellelement (16) verbundenen Elements (54) axial verschiebbar eingreifen.

9. Vorrichtung nach einem der vorangehenden Ansprüche, bei der
- ein Rückstellelement (121) gebildet ist durch mindestens ein federbelastetes Zugseil (122,124), das an einem im wesentlichen ringförmigen Seilführungsringelement (120) befestigt ist,
- wobei das Seilführungsringelement (120) mit der Rotoreinheit oder mit dem Drehgasstellelement drehfest gekoppelt ist,
- wobei das Seilführungsringelement (120) eine wenigstens teilweise im Querschnitt keilförmig ausgebildete Seilführungsnut (126) aufweist, in der das Zugseil (122,124) geführt ist.

10. Vorrichtung nach einem der vorangehenden Ansprüche, bei der
- der Drehstellungsgeber als Halleffekt-Drehsensorelement (46,104) ausgebildet ist,
- wobei an der Rotoreinheit (46, 106) ein Magnetelement (66) angeordnet ist,
- und die Statoreinheit (44, 108) aus zwei sich gegenüberliegenden Statorteilelementen (58a, 58b) besteht, die zwischen sich wenigstens eine Abstandsausnehmung (60a, 60b) freilassen, wobei in wenigstens einer Abstandsausnehmung (60a, 60b) wenigstens ein Hall-Element (62a,62b) angeordnet ist.

11. Vorrichtung nach Anspruch 10, bei der
- ein 100° bis 140° langes erstes Statorringelement (58a)
- und ein 220° bis 260° langes zweites Statorringelement (58b) vorgesehen ist.

12. Vorrichtung nach Anspruch 10 oder 11, bei der
- die Rotoreinheit (46, 106) ein teilringförmiges Magnetsegmentelement (66) einer Länge von 100° bis 150° umfaßt, das auf einem Magnethalteelement (68) angeordnet ist.

13. Vorrichtung nach einem der Ansprüche 1 bis 9, bei der
- der Drehstellungsgeber als induktiver Drehsensor (72) ausgebildet ist,
- wobei auf der Statoreinheit (76) ein Spulenschaltkreis (80) mit mindestens zwei Spulen (82, 84, 86) angeordnet ist,
- und auf der Rotoreinheit (74) ein induktives Koppelelement (78) zur positionsabhängigen induktiven Kopplung der beiden Spulen (82, 84, 86) vorgesehen ist.

14. Vorrichtung nach Anspruch 13, bei der
- der Spulenschaltkreis (80) teilringfömrig ist und eine Länge von 100° bis 140° aufweist.

15. Vorrichtung nach Anspruch 13 oder 14, bei der
- das induktive Kopplungselement (78) als Resonanzkreis mit mindestens einer Induktivität und einer Kapazität ausgebildet ist.

16. Elektronische Gassystemvorrichtung für Motorräder, die an einem Lenkerelement (12) angeordnet ist und die wenigstens aufweist
- ein Drehgasstellelement (16), das am Lenkerelement (12) zu verstellen ist,
- einem Drehstellungsgeber (42, 104), der aus einer Rotor- und einer Statoreinheit (46, 106; 44, 108) besteht, wobei die Rotoreinheit (46, 106) mit dem Drehgasstellelement (16) gegenüber der Statoreinheit (44, 108) zu bewegen ist, und
- wenigstens ein Federelement (100,114,128,130) mit dem wenigstens das Drehgasstellelement (16) zurückzustellen ist,
- wobei der Drehstellungsgeber (42, 104) neben dem Drehgasstellelement (16) angeordnet und die Rotoreinheit (46, 106) durch ein mit dem Drehgasstellelement (16) verbundenes Antriebsstellelement (48, 94) zu verstellen ist,
- und wobei die Statoreinheit (44, 108) aus zwei sich gegenüberliegenden Statorteilelementen (58a, 58b) besteht, die zwischen sich wenigstens eine Abstandsausnehmung (60a, 60b) freilassen, wobei in wenigstens einer Abstandsausnehmung (60a, 60b) wenigstens ein Hall-ASIC-Element (62a, 62b) angeordnet ist,
- wobei ein 100° bis 140° langes erstes Statorringelement (58a),
- und ein 220° bis 260° langes zweites Statorringelement (58b) vorgesehen ist.

17. Vorrichtung nach Anspruch 16, bei der
- die Rotoreinheit (46, 106) ein teilringförmiges Magnetsegmentelement (66) einer Länge von 100° bis 150° umfaßt, das auf einem Magnethalteelement (68) angeordnet ist.

18. Elektronische Gassystemvorrichtung für Motorräder, die an einem Lenkerelement (12) angeordnet ist und die wenigstens aufweist
- ein Drehgasstellelement (16), das am Lenkerelement (12) zu verstellen ist,
- einem Drehstellungsgeber (72), der aus einer Rotor- und einer Statoreinheit (74; 76) besteht, wobei die Rotoreinheit (74) mit dem Drehgasstellelement (16) gegenüber der Statoreinheit (76) zu bewegen ist, und
- wenigstens ein Federelement (100, 114, 128, 130) mit dem wenigstens das Drehgasstellelement (16) zurückzustellen ist,
- wobei die Rotoreinheit (74) durch ein mit dem Drehgasstellelement (16) verbundenes Antriebsstellelement (94) zu verstellen ist,
- wobei der Drehstellungsgeber als induktiver Drehstellungssensor (72) ausgebildet ist, bei dem auf der Rotoreinheit (74) ein induktives Koppelelement (78) angeordnet ist, und an der Statoreinheit (76) ein Spulenschaltkreis (80) mit mindestens einer Erregerspule (82, 84) und einer Empfängerspule (86) angeordnet ist,
- und wobei das induktive Kopplungselement(78) eine positionsabhängige induktive Kopplung zwischen der Erregerspule (82, 84) und der Empfängerspule (86) bewirkt,
- wobei der Spulenschaltkreis (80) teilringförmig ausgebildet ist und sich über einen Winkelbereich von 100°-140° erstreckt.

19. Vorrichtung nach Anspruch 18, bei der
- das induktive Koppelelement als Resonanzkreis (78) mit mindestens einer Kapazität (C) und einer Induktivität (L) ausgebildet ist.
